# EUROPÄISCHE PATENTSCHRIFT

(11) **EP 0 499 779 B1**
(45) Veröffentlichungstag und Bekanntmachung des Hinweises auf die Patenterteilung: **11.09.1996**
(21) Anmeldenummer: 92100386.9
(22) Anmeldetag: 11.01.1992
(51) Int. Cl.: C22B 1/16, C22B 7/02, C22B 7/04, C22B 1/245, C22B 21/00

(54) **Verfahren zum Behandeln von Abfällen**
Method for treatment of waste materials
Procédé de traitement des déchets

(30) Priorität: 24.01.1991 DE 4102032
(43) Veröffentlichungstag der Anmeldung: 26.08.1992
(73) Patentinhaber: Rheinbraun Aktiengesellschaft, 50935 Köln (DE); HECKETT MULTISERV PLC, London SW1Y 4NB (GB)
(72) Erfinder: Osing, Dirk, W-4005 Meerbusch 1 (DE); Ritter, Günter, W-5040 Brühl (DE); Treutlein, Günter, W-5000 Köln 40 (DE); Erken, Manfred, W-5010 Bergheim (DE)
(74) Vertreter: Koepsell, Helmut, Dipl.-Ing.

(56) Entgegenhaltungen:
- EP-A- 0 093 339
- EP-A- 0 217 139
- EP-A- 0 336 923
- AU-B- 432 037
- DE-A- 2 002 654
- DE-A- 3 208 699
- DE-A- 3 926 195
- DE-B- 1 013 873
- GB-A- 1 574 719
- US-A- 2 861 881

## Beschreibung

Die Erfindung betrifft ein Verfahren zum Behandeln von Abfällen, nämlich Walzzunderschlamm, Schlämmen aus der Produktion von Pigmenten, Schwarzschlamm, Konverterschlamm, Gichtgasschlamm, Schlämmen aus der Pyrit-Verarbeitung, Schlämmen aus der spanabhebenden Bearbeitung sowie Gemischen dieser Schlämme.

Das Behandeln von Abfallstoffen mit dem Ziel, diese handhabbar zu machen, ist bekannt. So offenbart DE 32 08 699 C2 ein Verfahren zur Herstellung von granuliertem Grünsalz - FeSO₄ x 7 H₂O. Letzteres ist ein Abfallprodukt, welches hauptsächlich bei der Titandioxid-Herstellung anfällt. Mit pH-Werten zwischen 1 und 2 ist es sehr sauer. Es hat die Neigung zusammenzubacken, so daß es aus Lagerbehältern nur mit Schwierigkeiten entnommen werden kann. Nach dem bekannten Verfahren wird Grünsalz mit staubförmiger getrockneter Braunkohle in einer solchen Menge vermischt, daß das resultierende Gemisch rieselfähig ist. Bei Grünsalz handelt es sich um einen relativ homogenen Abfallstoff. Dieses Verfahren ist aufwendig, da Braunkohlenstaub, der nur einen geringen Wassergehalt aufweisen darf, ein teures Produkt darstellt.

Weiterhin ist aus DE 32 15 727 Al ein Verfahren zum Behandeln von Rotschlamm bekannt, bei welchem es sich um ein Abfallprodukt handelt, das bei der Aluminiumherstellung in Form von Eisenoxid (Fe₂O₃, Fe₃O₄) anfällt, welches in einer alkalischen, wässrigen Suspension vorliegt. Diese Suspension wird filtriert, wobei sich der Rotschlamm auf dem Filtertuch absetzt. Das bekannte Verfahren sieht vor, diesen Rotschlamm mit Kohlenstaub, insbesondere Braunkohlenstaub zu vermengen, um ein rieselfähiges Gemisch zu erhalten. Auch dieses Verfahren ist aufwendig, zumal zur Erzielung der angestrebten Rieselfähigkeit verhältnismäßig große Mengen an Kohlenstaub zugemischt werden müssen. Bei Rotschlamm handelt es sich aber ebenfalls um ein verhältnismäßig homogenes Abfallprodukt.

In vielen Bereichen der Industrie fallen Abfallprodukte an, die wesentlich weniger homogen sind, da sie häufig ein Gemisch aus mehreren festen und flüssigen Komponenten darstellen. Ein typisches Produkt dieser Art ist Walzzunderschlamm. Beim Walzzunder handelt es sich z.B. um die Oxidationsschichten, die beim Walzen und Schmieden von Stahl sowie beim Ziehen von Draht anfallen. Im Walzwerk wird der Walzzunder z. B. durch Wasserstrahl von der gewalzten Metalloberfläche während des Walzens abgefegt. Das mit feinkörnigem Walzzunder belastete Abwasser sammelt sich unterhalb des Walzgerüstes in der Zundergrube, in welcher sich der Walzzunderschlamm absetzt, der neben dem Metalloxid und Wasser Verunreinigungen durch kohlenstoffhaltige Schmiermittel sowie durch alle möglichen Gegenstände enthält, die im Walzwerkbetrieb weggeworfen werden. Dieser Walzzunderschlamm ist jedenfalls, soweit es seine feinkörnigeren Bestandteile angeht, außerordentlich schwer handhabbar, so daß er im allgemeinen nicht wiederverwendet wird, obwohl er aufgrund seines hohen Gehaltes an Eisenoxid ein wertvolles Ausgangsprodukt darstellen würde. Eine Rückführung beispielsweise in einen metallurgischen Prozeß müßte aber auch den Gehalt an Schmiermitteln berücksichtigen. So kann Walzzunderschlamm beispielsweise mehr als 5% Schmieröl oder dergleichen enthalten, so daß eine Behandlung des Walzzunderschlamms z. B. durch Sintern normalerweise nicht möglich ist, da die beim Sintern aus den ölbestandteilen entstehenden Verbrennungsprodukte Probleme bereiten.

Andere Abfallstoffe, deren Wiederverwendung Schwierigkeiten bereitet, sind Schlämme, die aus der Produktion von Eisenoxid zur Herstellung von Farbpigmenten stammen, und Schwarzschlamm, der bei der Aluminium-Herstellung anfällt und im wesentlichen aus Al₂O₃, Kohlenstoff überwiegend in Form von Graphit und 35 - 40 % Wasser besteht. Ferner bereitet die Wiederverwendung von Gichtgasstäuben, Gichtgasschlämmen, Sinterstäuben, Konverterstäuben, Konverterschlämmen und Gießereistäuben, die in metallurgischen Betrieben anfallen, sowie Schleifstäuben, Schleifschlämmen, sowie Stäuben und Schlämmen aus der spannabhebenden Bearbeitung Schwierigkeiten, da sie häufig in Form eines schlecht handhabbaren oder auch nicht direkt wiederverwendbaren Gemisches anfallen.

Schwierigkeiten bei der Handhabung entstehen weiterhin dadurch, daß die vorstehend genannten Abfallstoffe und Abfallgemische in sehr unterschiedlichen Zusammensetzungen und damit unterschiedlichen Konsistenzen anfallen. Die Gemische sind auch häufig, beispielsweise aufgrund der im Walzzunderschlamm enthaltenen Fremdgegenstände, bei denen es sich auch um kleinere Abfallstücke des Walzgutes handeln kann, sehr heterogen, welche Tatsache ebenfalls die Anwendung geeigneter Behandlungsschritte zur Erzielung eines wiederverwendbaren, handhabbaren Produktes erschwert.

Demzufolge liegt der Erfindung die Aufgabe zugrunde, das Verfahren der einleitend beschriebenen Art so weiterzuentwickeln, daß auch bezüglich ihrer Zusammensetzung, ihrer Konsistenz, ihres Feuchtigkeitsgehaltes und der in ihnen enthaltenen Verunreinigungen unterschiedliche und bezüglich Zusammensetzung und Konsistenz schwankende Abfallprodukte durch entsprechende Behandlung wiederverwendbar gemacht werden, wobei dies insbesondere dadurch erreicht werden soll, daß das resultierende Produkt in einen Zustand gebracht wird, der eine problemlose Handhabung erlaubt. Dabei soll nach Möglichkeit eine Wiederverwertung erreicht werden, bei welcher keine oder nur wenig Rückstände übrig bleiben. Die Behandlung der Abfallprodukte zwecks Erreichung des angestrebten Zieles soll wenig aufwendig sein. Dies gilt nicht zuletzt auch für die dem Abfallgemisch zuzusetzenden Stoffe oder Gemische, die dazu dienen, die Konsistenz des Ausgangsgemisches zu verändern. Als optimal ist dabei eine Verfahrensweise anzusehen, bei welcher die den Ausgangsgemischen zuzusetzenden Stoffe ihrerseits auch Abfallstoffe darstellen, die auf diese Weise ebenfalls einer Verwertung zugeführt werden. Die dem Ausgangsgemisch zuzusetzenden Behandlungsstoffe sollen sich bei der Verwertung möglichst neutral verhalten oder die bei der Verwertung ablaufenden Prozesse sogar günstig beeinflussen.

Diese Aufgabe kann dadurch gelöst werden, daß den Schlämmen bzw. Gemischen Flugasche, Koksstäube und ggfs. andere Stäube in solcher Menge zugefügt und mit den Schlämmen bzw. Gemischen vermischt werden, bis die Flüssigkeit soweit gebunden ist, daß Agglomerate vorliegen und daß das so erhaltene Produkt schließlich durch Sieben in einen Verunreinigungen enthaltenden Grobanteil und in einen Feinanteil mit einer maximalen Korngröße von etwa 4mm zum Einblasen in einen metallurgischen Prozeß oder für die Zementherstellung klassiert wird.

Zwar ist aus DE-A-2002654 ein Verfahren zum Aufbereiten eines eisenhaltigen Schlammes für den nachfolgenden Einsatz in Sinteranlagen bekannt, bei welchem dem Schlamm feinförniger gebrannter Kalk sowie eisenhaltiger Staub aus Trockenentstaubungsanlagen und ein feinkörniger oder staubförmiger Kohlenstoffträger zugemischt werden. Bei diesem Verfahren fehlt es jedoch an der Verwendung von Agglomeraten mit einem Korndurchmesser, der ein Einblasen in ein metallurgisches Aggregat erlaubt.

Der Einsatz von Flugasche weist mehrere Vorteile auf. Einmal stellt Flugasche zu einem großen Teil selbst ein Abfallprodukt dar, welches bei Anwendung der Lehre gemäß der Erfindung einer Wiederverwendung zugeführt werden kann. Flugasche, die im allgemeinen in Elektrofiltern aus Gasen, insbesondere Rauchgasen abgeschieden wird, ist staubförmig und somit außerordentlich feinkörnig, so daß sie aufgrund der großen spezifischen Oberfläche in der Lage ist, sehr viel Feuchtigkeit zu binden. Darüber hinaus weist Flugasche in vielen Fällen Bestandteile, insbesondere CaO und MgO auf, die den Ablauf des anschließenden thermischen Prozesses günstig beeinflussen.

Die Verwendung von Koks wird insbesondere dann in Frage kommen, wenn er ebenfalls in Staubform vorliegt, da Koksstaub ein billiges Produkt ist, welches nicht ohne weiteres für andere Zwecke verwendet werden kann. Allerdings wird der Verwendung von Flugasche in vielen Fällen der Vorzug zu geben sein, zumal sie bei der Reinigung von Rauchgasen und anderen Gasen an sehr vielen Orten anfällt, so daß die Aufwendungen für den Transport an den Ort, in welchem das Behandeln stattfindet, in vielen Fällen mit weniger Kosten verbunden sein wird als bei Koks.

Die jeweils dem Schlamm bzw. Gemisch zuzufügende Menge an Flugasche und/oder Koks und die Dauer der Mischzeit hängen im wesentlichen von der Zusammensetzung und der Konsistenz des Schlammes bzw. Gemisches ab. Bei diesem Mischvorgang wird im allgemeinen auch gleichzeitig eine Homogenisierung des Schlammes bzw. Gemisches stattfinden. Es kann aber auch zweckmäßig oder sogar erforderlich sein, eine Homogenisierung des Schlammes bzw. Gemisches vor dem Vermischen mit den Flugasche und/oder Koks aufweisenden Substanzen durchzuführen. Dies kann beispielsweise dann der Fall sein, wenn der Schlamm bzw. das Gemisch längere Zeit gelagert wurde, so daß die einzelnen Komponenten des Schlammes bzw. des Gemisches sich voneinander getrennt oder einzelne Komponenten sich abgesetzt haben.

Gemäß einem weiteren Vorschlag der Erfindung kann so vorgegangen werden, daß einem ersten Schlamm bzw. Gemisch von Abfallstoffen ein zweiter Schlamm bzw. ein zweites Gemischt von Abfallstoffen hinzugefügt wird, welches bezüglich wenigstens Feuchtigkeitsgehalt und/oder Korngröße in einem anderen Zustand vorliegt als der erste Schlamm bzw. das erste Gemisch. Eine derartige Handhabung kann z. B. bei Rückständen aus der Pigmentindustrie zu Farbherstellung zweckmäßig sein. So wird Eisenoxid als Pigment, d. h. Basisstoff für die Herstellung der Farben rot und schwarz verwendet. Dabei fallen bezüglich der Zusammensetzung gleichartige Reststoffe ab, nämlich Fe-haltige oxidische Rückstände aus dem Absetzbecken sowie Fe-haltige oxidische Rückstände in Form von Filterpasten und Filterkuchen. Die Rückstände aus dem Absetzbecken bilden einen körnigen, feuchten, schwarzen Schlamm, dessen Körnchen überwiegend aus Eisenoxid bestehen. Die Filterrückstände bilden einen feuchten Schlamm, der jedoch schmierig und stichfest ist. Beide Rückstände können miteinander vermischt werden, um so ein resultierendes Gemisch zu erhalten, welches dann mit Flugasche und/oder Koks vermischt wird.

In entsprechender Weise kann auch bei der Behandlung von Walzzunderschlämmen vorgegangen werden, die beispielsweise in Abhängigkeit von den Betrieben, aus denen sie stammen, in unterschiedlichen Konsistenzen vorliegen können. Auch hier besteht die Möglichkeit, einen ersten Walzzunderschlamm mit einem zweiten Walzzunderschlamm zu vermischen, wobei Flugasche und/oder Koks dem ersten Schlamm und/oder dem zweiten Schlamm und/oder dem Gemisch aus erstem Schlamm und dem zweiten Schlamm zugegeben werden.

Die beiden vorstehend angeführten Beispiele verwenden Schlämme, die bezüglich der stofflichen Zusammensetzung zumindest weitgehend übereinstimmen. Die Erfindung ist jedoch auch dann anwendbar, wenn erstes Gemisch und zweites Gemisch auch bezüglich der stofflichen Zusammensetzung sich deutlich voneinander unterscheiden. So ist es möglich, als erstes Gemisch einen Walzenzunderschlamm und als zweites Gemisch Rückstände aus der Pigmentindustrie zu verwenden oder umgekehrt. Es ist auch möglich, daß erstes Gemisch und/oder zweites Gemisch bereits Gemische aus wenigstens zwei Ausgangsgemischen darstellen.

Die Menge an Flugasche und/oder Koks, die dem ersten und/oder zweiten Gemisch oder dem aus beiden Gemischen entstehenden resultierenden Gemisch hinzugefügt wird, hängt von den jeweiligen Gegebenheiten, insbesondere dem Feuchtigkeitsgehalt des Gemisches und der Zusammensetzung und Korngröße der Zuschlagsstoffe ab. Die Menge ist durch einfache Versuche festzustellen. Sie ist so zu wählen, daß sich im Zuge des Mischens Agglomerate bilden, die es ermöglichen, das resultierende Gemisch beispielsweise durch Sieben zu klassieren, um so in den Ausgangsgemischen befindliche Fremdkörper, beispielsweise Papier, Putzlappen, Flaschen, Holzteile, Eisenteile, Blechdosen, Plastikfolien usw. zu entfernen. Im Ursprungszustand sind die Abfallgemische nicht siebbar. So kann bei Walzzunderschlamm bestimmter Konsistenz der erforderliche Anteil an Flugasche 30 - 35 Gew.-% des feuchten Walzzunderschlamms betragen. Bei Verwendung von Koks oder auch einer Flugasche anderer Herkunft können bei gleichem Walzzunderschlamm andere Mengen zur Erzielung des angestrebten Effektes erforderlich sein. In allen Fällen wird der Feuchtigkeitsgehalt des Abfallgemisches durch die Flugasche und/oder den Koks so stark gebunden, daß es zur Bildung der bereits erwähnten Agglomerate kommt, die nicht oder nur in so geringem Ausmaß aneinanderhaften, daß ein Klassieren durch Sieben möglich ist. Durch das Hinzufügen von Flugasche und/oder Koks wird insbesondere das Aufwenden von Energie zum Trocknen des Abfallgemisches vermieden.

Als weitere Komponenten eines Abfallgemisches kommen Gichtgasstaub, Gichtgasschlamm, Sinterstaub, Konverterstaub, Konverterschlamm, Schleifstaub, Schleifschlamm, Gießereistaub sowie Stäube und Schlämme aus der spanabhebenden Bearbeitung in Frage. Dabei ist es möglich, daß die vorgenannten Stäube auch dazu beitragen, die Feuchtigkeit im Ausgangsgemisch zu binden.

Bei der Verwendung von Koks in feiner und/oder feinster Körnung zur Behandlung des ersten und/oder zweiten Gemisches wird dadurch zugleich der C-Gehalt des resultierenden Gemisches er-höht. Dies kann den Vorteil haben, daß dadurch der Kohlenstoffbedarf eines nachgeschalteten Prozesses zur Wiederverwertung ganz oder teilweise gedeckt wird. Darüber hinaus ist es ohne weiteres möglich, unabhängig von der Behandlung des Schlammes bzw. Gemisches durch Hinzufügen von Flugasche und/oder Koks zwecks Bildung von Agglomeraten und/oder zur Erzielung der Klassierbarkeit zusätzlich Koks und/oder Kohle in feiner oder feinster Körnung zwecks Einstellung des C-Gehaltes hinzuzufügen. Es kann damit gerechnet werden, daß auch dadurch bestimmte Feuchtigkeitsmengen des ersten und/oder zweiten Gemisches gebunden werden, obwohl dies normalerweise nicht in dem Ausmaß geschieht, wie bei Flugasche oder Koksstaub, der z. B. dann, wenn er aus Braunkohle hergestellt ist, eine Oberfläche von etwa 300 m²/g aufweisen kann.

Wenn die Flugasche keine ausreichenden Mengen an CaO und/oder MgO oder chemisch in gleicher Weise wirkende Substanzen ent-hält, kann es zweckmäßig sein, Schlamm bzw. Gemisch und/oder dem resultierenden Gemisch gebrannten Kalk oder solche Substanzen hinzuzufügen, die unter hohen Temperaturen gebrannten Kalk oder chemisch in gleicher Weise reagierende Substanzen liefern. Dies wird insbesondere dann zweckmäßig, ggf. sogar erforderlich sein, wenn die Azidität des zur Wiederverwendung in einem thermischen Prozeß zugeführten Gemisches einen bestimmten Wert nicht übersteigen darf oder wenn dieses Gemisch in jedem Fall basisch sein muß. Die Verwendung von Flugasche mit solchen Bestandteilen ist in jedem Fall besonders zweckmäßig, da sie den angestrebten Effekt ohne zusätzlichen Aufwand durch Hinzufügen von Brandkalk oder dergleichen erreicht. Insbesondere Braunkohlenaschen sind häufig basisch.

Die Verwendung derartiger Flugaschen kann insbesondere auch deshalb vorteilhaft sein, weil die entstehenden Agglomerate nach einer bestimmten Zeit durch einen Abbindevorgang verfestigen, so daß sie im Gegensatz zum Ausgangsmaterial im Freien gelagert werden können, ohne daß die Gefahr einer Umweltbeeinträchtigung beispielsweise unter der Einwirkung von Regenwasser zu befürchten ist. Außerdem besteht die Möglichkeit, die bei Anwendung des Verfahrens gemäß der Erfindung entstehenden kleinen Agglomerate, die beispielsweise einen Durchmesser in der Größenordnung von 4 mm haben können, zur Bildung von größeren Agglomeraten zu pelletieren.

Im folgenden wird die Erfindung weiter anhand eines Ausführungsbeispiels erläutert, bei welchem Rückstände aus der Pigmentindustrie behandelt wurden. Bei der Lagerung dieser Abfallstoffe im Freien laufen Oxidationsvorgänge unter entsprechender Wärmeentwicklung ab, wobei Temperaturen von mehr als 100° C auftreten können. Es ist somit bei den heute üblichen Anforderungen an den Umweltschutz nicht mehr möglich, derartige Materialien ohne besondere Vorkehrungen in eine Deponie zu geben.

Bei Anwendung des Verfahrens gemäß der Erfindung ist es bei diesen Abfallstoffen zweckmäßig, sie zunächst zu homogenisieren. Dazu werden die beiden insbesondere in bezug auf Feuchtigkeitsgehalt und Korngröße sich unterscheidenden Abfallstoffe, also die Rückstände aus dem Absetzbecken sowie die Rückstände in Form von Filterpasten und Filterkuchen, in der Weise miteiander vermischt, daß eine weitgehende einheitliche, schwarze, feuchte, breiige bis stichfeste Masse vorliegt. In diese Masse wird sodann trockene Flugasche eingebracht und damit vermengt. Die Menge der Flugasche hängt von der gewünschten Beschaffenheit der resultierenden Mischung aus den beiden Ausgangs-Abfallgemischen ab. Dies gilt auch für die Dauer des Mischvorganges. Beides kann durch einfache Versuche ermittelt werden, wobei sich Erfahrungswerte herausbilden, welche Quantität an Flugasche - oder Koks - bei einer bestimmten Konsistenz des Gemisches erforderlich ist. Im allgemeinen kann unterstellt werden, daß die Feuchtigkeitsgehalte von Flugasche und/oder Koks vernachlässigbar gering sind.

Im Verlauf des Zumischens von Flugasche wird das resultierende Gemisch unter Bildung von kleinen Agglomeraten rieselfähig, so daß es zur Entfernung von gröberen Verunreinigungen durch Sieben klassiert werden kann. Bei Verwendung von basischer Braunkohlenflugasche wird die Azidität der resultierenden, überwiegend agglomerierten Masse stark reduziert. Falls Flugasche aus Steinkohlenfeuerungen verwendet wird, die im allgemeinen nicht basisch ist, kann dem Gemisch zur Neutralisierung Kalk hinzugefügt werden. Auf diese Weise kann auch der ggf. vorhandene Kalkbedarf des nachfolgenden thermischen Prozesses ganz oder teilweise gedeckt werden.

Das Mischungsverhältnis zwischen erstem Gemisch - Rückständen aus dem Absetzbecken - und zweitem Gemisch - Filterrückständen - betrug im konkreten Fall etwa 3 : 1. Bei einer Aufgabemenge von 1.000 kg reichte im allgemeinen eine Mischzeit von 1 - 5, vorzugsweise 1 - 2 Minuten aus, um erstes Gemisch und zweites Gemisch in einem Zwangsmischer zu homogenisieren.

Danach wurden die Zuschlagsstoffe hinzugefügt. Zunächst wurden, bezogen auf die Menge an resultierendem Gemisch, zwischen 10 und 20 % Braunkohlenflugasche hinzugefügt und im Zwangsmischer mit dem homogenisierten Gemisch vermischt. Dadurch wurde bereits ein rieselfähiges Gemisch erhalten, welches neutralen bis leicht basischen Charakter hat. Jedenfalls verhält sich das Gemenge in einem anschließenden metallurgischen Prozeß neutral. Seine geringe Basizität fällt nichts ins Gewicht. Zur Bereitstellung von C für den anschließenden metallurgischen Prozeß können Braunkohlen- und/oder Steinkohlenstäube oder feinstkörniger Koks aus diesen Kohlen z. B. in einem Verhältnis von 7 - 8%, wiederum bezogen auf die Einsatzmenge des ersten und des zweiten Gemisches aus Abfallstoffen, hinzugefügt werden. Ob und in welchem Ausmaß C-haltige Stäube hinzugefügt werden, wird von den jeweiligen Verhältnissen, insbesondere der Zusammensetzung der übrigen Stoffe, die dem thermischen Prozeß zugeführt werden, abhängen.

Durch die Zugabe der sehr feinkörnigen, hydraulisch wirkenden Flugasche wird zunächst ein großer Teil der im Gemisch enthaltenen Feuchtigkeit gebunden. Hinzu kommt ein weiterer Effekt, der darin besteht, daß durch die Vermischung mit den feinen Ascheteilchen, welche überwiegend eine Korngröße von 70 - 90 µm aufweisen, der Zutritt des Luftsauerstoffes zu den Fe-Oxidteilchen erschwert wird, so daß deren weitere exotherme Umsetzung zumindest stark eingechränkt wird. Dies ist nicht zuletzt eine Folge der bereits erwähnten Agglomeratbildung, da dadurch die wirksame Oberfläche der Fe-Oxidteilchen verringert wird. Außerdem bilden die Ascheteilchen eine Art Mantel um die Agglomerate, der ebenfalls den Zutritt von Sauerstoff unterbindet oder stark reduziert. Dies gilt auch bei der Zugabe von Koksstaub mit entsprechend feiner Körnung. So kann eine resultierende Mischung aus Koksstaub und erstem Gemisch und zweitem Gemisch hergestellt werden, die ähnliche Eigenschaften aufweist wie das die Flugasche enthaltende resultierende Gemisch. Allerdings hat die Hinzufügung von Flugasche mit puzzolanischen Eigenschaften den Vorteil, daß die gebildeten Agglomerate abbinden und somit fester werden.

Das resultierende Gemisch kann in diesem Fall pelletiert werden. Dies geschieht zweckmäßig nach einem Klassiervorgang, durch welchen Verunreinigungen, Fremdkörper usw. entfernt worden sind. Ob für den Pelletiervorgang zusätzlich Wasser zugeführt werden muß, hängt unter anderem vom Feuchtigkeitsgehalt der beim vorangegangenen Mischvorgang gebildeten Agglomerate ab. Im allgemeinen wird ein gewisser zusätzlicher Wasserbedarf vorhanden sein. Die so erhaltenen Pellets können durch Zufuhr von Wärme und/oder durch Lagerung gehärtet werden, so daß sie im Bedarfsfall die für den nachfolgenden metallurgischen Prozeß erforderliche Festigkeit aufweisen. Auch hierbei können puzzolanische Eigenschaften der Flugasche von Vorteil sein, da die stattfindenden Reaktionen exotherm sind und die entstehende Wärme die Feuchtigkeit der Pellets verringert. So lag die Anfangstemperatur der Pellets zwischen 100 und 120° C. Nach 20 Stunden Lagerzeit wurden nur noch Temperaturen zwischen 50 und 70° C und nach 48 Stunden Lagerzeit nur noch Temperaturen zwischen 18 und 35° C festgestellt. Die so gebildeten Pellets wurden anschließend einer Druckprüfung unterzogen, um deren Festigkeit zu ermitteln. Die Ergebnisse dieser Prüfung sind in der Tabelle I angeführt. Diese Ergebnisse zeigen, daß mit der Größe der Pellets auch deren Druckfestigkeit zunimmt, wie insbesondere die Ergebnisse der in Tabelle I angeführten Versuche A bis M zeigen.

Da die Pellets durchweg unrund waren, wurden zur Bestimmung ihrer Größe zwei Messungen in den Richtungen "d" und "h" durchgeführt, die senkrecht zueinander verliefen. Die Temperatur bei Durchführung der Druckversuche betrug 18° C.

Ferner wurde untersucht, wie sich die erzeugten Pellets bei Lagerung verhalten. Mehrere kleinere Schüttungen von jeweils 40 kg dieser Pellets wurden in einem überdachten Raum mit unterschiedlichen Mengen Wasser berieselt, um zu prüfen, ob und inwieweit eine Verfestigung oder Verkrustung auftrat. An der Oberfläche der jeweiligen Schüttung konnte eine geringe Verkrustung festgestellt werden. Dicke und Härte derselben waren jedoch sehr gering. Die Kruste ließ sich leicht zwischen den Fingern zerreiben. Insbesondere blieben die Pellets über einen Zeitraum von mehreren Wochen erhalten. Gleiche Ergebnisse wurden an einer Schüttung aus solchen Pellets erzielt, die im Freien gelagert und dem Regen ausgesetzt waren. Auch diese Schüttung erwies sich noch nach Wochen der Lagerung im Freien als rieselfähig und pneumatisch förderbar.

Die Behandlung der Abfallstoffe durch Vermischung mit basischer Braunkohlenasche bietet auch bezüglich der Lagerbarkeit des resultierenden Gemisches oder bestimmter Fraktionen desselben erhebliche Vorteile. Dies gilt insbesondere bezüglich der Rückstände aus der Pigmentproduktion, da diese häufig in starkem Maße mit Schwermetallen und anderen unerwünschten Bestandteilen belastet sind. Diese Rückstände geben, wenn sie der Einwirkung von Regen ausgesetzt sind, Sickerwässer ab, die bei unbehandelten Rückständen aus der Pigmentherstellung sehr sauer sind. Sie haben einen hohen Bedarf an chemischem Sauerstoff.

Nach dem Vermischen mit basischen Braunkohlenflugaschen wurde beim Lagern der dabei entstehenden Agglomerate ein Austreten von sauren Sickerwässer nicht mehr beobachtet. Vielmehr waren diese Sickerwässer neutral bis basisch. Beim Austreten von leicht alkalischen Sickerwässern können diese auf die gelagerten Agglomerate zurückgeführt werden. Infolge der erhöhten Temperatur der Agglomerate, die auf die bereits erwähnten ablaufenden exothermen Reaktionen zurückzuführen sind, verdampft ein Teil des zurückgeführten Wassers, so daß es ohne zusätzlichen Energieaufwand entsorgt werden kann.

In der anliegenden Tabelle II sind die Analyseergebnisse von zwei Eluierversuchen dargestellt, die mit zwei Proben von Rückständen aus der Pigmentherstellung durchgeführt wurden. Diese Proben wurden keiner besonderen Behandlung unterzogen, insbesondere nicht mit Flugasche und/oder Koksstaub vermischt.

Tabelle II zeigt, daß das Eluat sauer ist und erhebliche Mengen an unerwünschten Bestandteilen, insbesondere Schwermetallen, enthält bei einem hohen CSB (Chemischer Sauerstoff-Bedarf).

Tabelle III zeigt die Ergebnisse von Eluierversuchen an fünf Proben von Rückständen aus der Pigmentherstellungt, die nach dem Verfahren gemäß der Erfindung mit Flugasche oder Koks vermischt worden waren. Zu den einzelnen Proben ist folgendes zu sagen:

Bei der Flugasche der Probe 1 handelte es sich um Asche aus einer üblichen Braunkohlenstaubfeuerung.

Bei den Flugaschen der Proben 3 bis 5 handelte es sich um Flugaschen aus einer Braunkohlen-Wirbelschichtfeuerung.

Bei Probe 2 wurde Staub von Braunkohlenschwelkoks verwendet.

Zur Vermischung sämtlicher Proben wurde ein Zwangsmischer verwendet.

Ein Vergleich der Werte der Tabelle II und III zeigt, daß in jedem Fall, also unabhängig davon, ob Koks oder Flugasche zugemischt wurde, eine merkliche Verringerung des CSB-Wertes erreicht wurde. Von Bedeutung ist ferner die Änderung des pH-Wertes, da sowohl die Zumischung von Flugasche als auch von Koksstaub dazu führte, daß das Eluat basisch wurde. Dies läßt den Schluß zu, daß selbst der basische Aschegehalt des Kokses bei Probe 2 ausreicht, um eine merkliche Veränderung des pH-Wertes zu bewirken, wenngleich das Ausmaß dieser Änderung deutlich kleiner ist als bei den Proben, die mit Flugasche vermischt worden waren.

Von Bedeutung ist ferner die Verringerung des Gehaltes an Schwermetallen im Eluat durch die Vermischung des Abfalls mit basischer Braunkohlenflugasche.

Der Anstieg des Sulfatgehaltes, abgesehen von Probe 2, gegenüber den unbehandelten Proben gemäß Tabelle II ist offensichtlich auf den Sulfatgehalt der Flugasche, insbesondere CaSO₄ zurückzuführen.

In ähnlicher Weise können Pyritschlämme mit Flugasche vermischt und rieselfähig gemacht werden. Pyritschlämme sind besonders dazu geignet, über die Vermengung mit Asche hinaus mit Braunkohlenkoks, ggf. auch Braunkohlenstaub, vermischt zu werden, um eine körnige, rieselfähige Substanz zu erhalten, die ohne Probleme über längere Zeiträume gelagert, mühelos transportiert und gehandhabt werden kann, um in dieser Form in einen metallurgischen Prozeß, beispielsweise Hochofenprozeß, eingeblasen zu werden. Dies kann, wie auch bei anderen Substanzen, z. B. Walzenzunderschlamm, in einfacher Weise über die Windformen eines Hochofens geschehen.

Es ist aber auch möglich, das unter Anwendung des Verfahrens der Erfindung hergestellte resultierende Gemisch zu brikettieren, wenngleich dies zweckmäßig nicht später als zwei bis drei Tage nach Herstellung des resultierenden Gemisches erfolgen sollte. Dabei wird die in letzteren vorhandene Restfeuchte zur Bindung der Briketts benutzt. Dabei dient die Flugasche, soweit sie puzzolanische Eigenschaften aufweist, als Bindemittel.

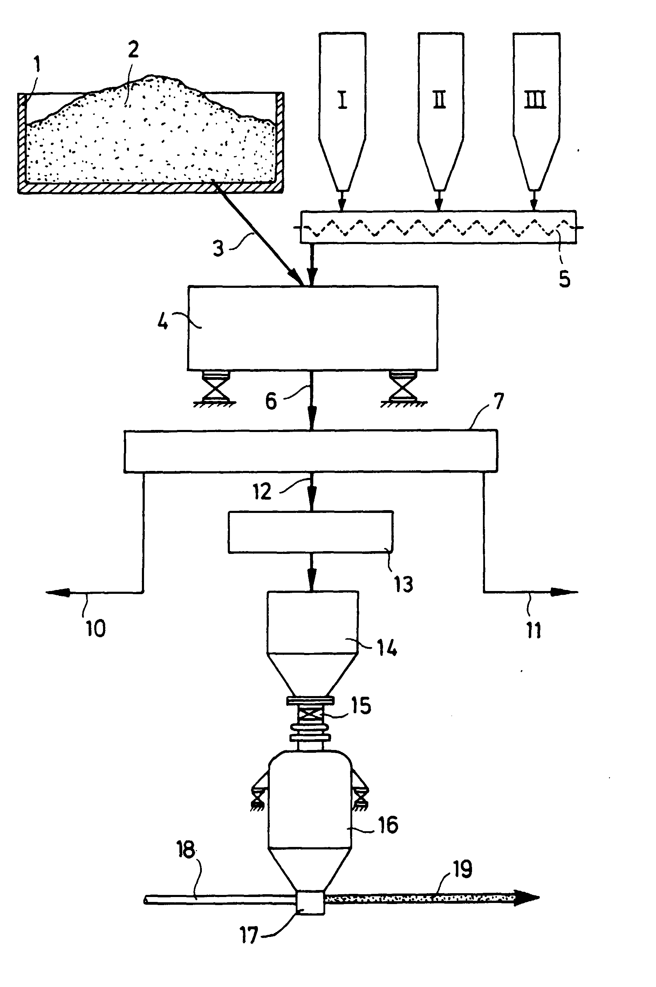

In der Zeichnung ist das Schema einer derzeit bevorzugten Einrichtung zur Durchführung des Verfahrens gemäß der Erfindung dargestellt.

In einem Trog 1 ist Walzenzunderschlamm 2 zwischengelagert, der aus einem Walzwerk stammt. Der Walzenzunderschlamm 2 ist feucht und enthält neben öl und Wasser sowohl metallische als auch nichtmetallische Verunreinigungen. Häufige metallische Verunreinigen sind beispielsweise Abfallstücke des Walzgutes. Verunreinigungen nichtmetallischer Art werden überwiegend durch Gegenstände gebildet, die im Walzwerkbetrieb weggeworfen werden, beispielsweise Putzlappen, Plastikbecher, Papier etc. Häufig zeigt der Walzenzunderschlamm 2 thixotrope Eigenschaften, die es erforderlich machen, daß er im Trog 1 zwischengelagert wird.

Über eine Förderstrecke 3 wird der Walzenzunderschlamm 2 aus dem Trog 1 abgezogen und einer Mischeinrichtung 4 zugeführt, die vorteilhaft einen Zwangsmischer aufweist. Das Abziehen des Walzenzunderschlammes 2 aus dem Trog 1 erfolgt chargenweise. In Abhängigkeit von der Größe der Mischeinrichtung 4 können beispielsweise 500 kg Walzenzunderschlamm alle 5 bis 10 Minuten abgezogen und in die Mischeinrichtung 4 gegeben werden. Letzterer werden über eine Dosierschnecke 5 Zuschlagsstoffe zugeführt, die in Silos I, II und III gelagert sind. So kann sich beispielsweise im Silo I Flugasche aus einer Braunkohlenfeuerung befinden. Im Silo II können Kohlen- oder Koksstaub und im Silo III andere metallhaltige Stäube, z. B. Gichtgasstäube, die Metallverbindungen enthalten, gelagert sein. Auch aus den Silos I bis III erfolgt das Abziehen der Zuschlagsstoffe chargenweise in Abhängigkeit von den der Mischeinrichtung 4 aufgegebenen Mengen an Walzenzunderschlamm 2. Ob Zuschlagsstoffe aus allen drei Silos der Mischeinrichtung 4 zugeführt werden, hängt ab von den jeweiligen Gegebenheiten, insbesondere der Zusammensetzung und der Konsistenz des Walzenzunderschlammes 2 sowie der späteren Verwendung desselben. So ist es möglich, dem Walzenzunderschlamm 2 lediglich Flugasche aus dem Silo I hinzuzufügen. Es besteht auch die Möglichkeit, einen Silo für gebrannten Kalk vorzusehen. Dies wird insbesondere dann zweckmäßig sein, wenn Flugasche, insbesondere aus Steinkohlenfeuerungen, verwendet wird, die keine oder wenig basische Bestandteile enthält. Das Verhältnis von Walzenzunderschlamm zur Gesamtheit der Zuschlagstoffe kann beispielsweise etwa 2 bis 5 : 1 betragen. Die Silos können mit in der Zeichnung nicht dargestellten Dosiereinrichtungen versehen sein.

Die Mischzeit in der Mischeinrichtung 4 beträgt ebenfalls in Abhängigkeit von der Beschaffenheit des Walzenzunderschlamms 2 und der Menge der hinzugefügten Zuschlagsstoffe im allgemeinen 1 bis 10 Minuten. Nach Beendigung des Mischvorganges wird das resultierende Gemisch, welches den konditionierten Walzenzunderschlamm 6 darstellt, auf eine Klassiereinrichtung 7 gegeben, die als ggf. mehrstufige Siebeinrichtung ausgebildet sein kann. Das die Mischeinrichtung 4 verlassende resultierende Gemisch liegt normalerweise in Form von kleinen Agglomeraten vor, die beispielsweise eine Korngröße bis zu 4 mm aufweisen. Es wird einer Klassiereinrichtung 7 aufgegeben, die als ggf. mehrstufige Siebeinrichtung ausgebildet sein kann. In der Klassiereinrichtung 7 werden die Verunreinigungen, die im allgemeinen aus größeren Teilen bestehen, abgeschieden. Dabei kann die Anordnung so getroffen sein, daß beispielsweise grobe metallische und damit magnetisierbare Verunreinigungen bei 10, andere, nichtmetallische und somit nichtmagnetische Verunreinigungen über 11 abgeführt werden.

Der feinkörnige Siebdurchlauf 12, der überwiegend aus Agglomeraten mit einer maximalen Korngröße von z.B. etwa 4 mm besteht, wird, falls erforderlich, bei 13 zwischengelagert. Dies kann z. B. zweckmäßig sein, um zunächst ein Abbinden der Agglomerate abzuwarten. Vom Zwischenlager 13, ggf. aber auch direkt von der Klassiereinrichtung 7, wird der Siebdurchlauf 12 in ein Silo 14 gegeben, der über ein Ventil 15 mit einem Druckgefäß 16 verbunden ist. Letzteres hat einen Ausgang 17, welcher mit einer Zuleitung 18 für ein Fördergas versehen ist. Mit Hilfe des Fördergases werden jeweils vorbestimmte Mengen an konditioniertem Walzenzunderschlamm 6 durch eine Ableitung 19 aus dem Druckgefäß 16 entnommen und beispielsweise in die Windform eines Hochofens oder in einen Drehrohrofen für die Zementherstellung eingeblasen. Die möglichen Anwendungsfälle für die Wiederverwertung des konditionierten, agglomerierten Walzenzunderschlamms 6 sind vielfältig.

Bei Verwendung eines Siebes in der Klassiereinrichtung 7 kann es zweckmäßig sein, das Sieb zumindest auf Teilen seiner Erstreckung oberseitig mit einer Abdeckung in Form einer flexiblen Matte zu versehen. Diese Matte kann beispielsweise von einem Abschnitt eines Förderbandes gebildet werden, welches ganz oder überwiegend aus gummielastischem Material besteht. Eine solche Matte, die ein geringes Gewicht pro Flächeneinheit aufweist, soll dazu dienen, Agglomerate, die eine bestimmte Korngröße überschreiten, auf die für den Siebdurchgang gewünschte Korngröße zu zerkleinern.

Abweichend von dem in der Zeichnung dargestellten Verfahrensablauf kann auch so vorgegangen werden, daß die resultierende Mischung nach der Klassiereinrichtung 7, ggf. auch nach Zwischenlagerung 13, einem weiteren Mischer zugeführt wird, in welchem eine Vermischung mit einer zusätzlichen körnigen Substanz erfolgt, mit der gemeinsam das resultierende Gemisch einem thermischen Prozeß zugeführt wird. So ist es denkbar, daß bei Einblasen von Kohlenstaub durch die Windformen in das Gestell eines Hochofens der konditionierte Walzenzunderschlamm - oder ein anderes Gemisch - einem Mischer, einer Kammer oder einem sonstigen Raum zugeführt wird, von dem bzw. der das konditionierte Gemisch gemeinsam mit der Kohle pneumatisch gefördert und durch die Windformen in den Hochofen eingeblasen wird. Wie dabei im einzelnen verfahren wird, kommt auf die jeweiligen Umstände an, z. B. auch darauf, ob die in das Gestell des Hochofens - oder in einem anderen thermischen Prozeß - einzublasende kohlenstoffhaltige Material zur Konditionierung des Gemisches aus Abfallstoffen geeignet ist oder lediglich zur Deckung des C-Bedarfes dient.

**Tabelle I**

| Druckversuche an Pellets bis zum Auftreten des ersten Risses im Pellet | | | |
|---|---|---|---|
| Proben-Nr. | d (mm) | h (mm) | Kraft (N) |
| 1 | 9,17 | 6,01 | 175 |
| 2 | 8,94 | 6,76 | 150 |
| 3 | 11,03 | 6,25 | 200 |
| 4 | 10,18 | 5,87 | 275 |
| 5 | 9,75 | 6,78 | 250 |
| 6 | 5,33 | 4,51 | 175 |
| 7 | 9,81 | 5,63 | 150 |
| 8 | 8,06 | 7,34 | 200 |
| 9 | 8,13 | 5,78 | 150 |
| 10 | 14,58 | 5,99 | 225 |
| 11 | 7,61 | 5,53 | 175 |
| 12 | 7,66 | 5,61 | 100 |
| 13 | 8,49 | 4,95 | 200 |
| 14 | 7,8 | 6,32 | 100 |
| 15 | 7,84 | 5,35 | 150 |
| 16 | 9,03 | 6,15 | 75 |
| 17 | 6,79 | 4,92 | 125 |
| A | 27,0 | 12,64 | 600 |
| B | 14,88 | 8,91 | 350 |
| C | 22,64 | 15,88 | 200 |
| D | 16,55 | 9,77 | 450 |
| E | 17,26 | 12,34 | 450 |
| F | 22,8 | 13,29 | 500 |
| G | 17,15 | 9,2 | 250 |
| H | 22,31 | 12,16 | 600 |
| I | 13,87 | 10,45 | 300 |
| J | 20,25 | 11,72 | 150 |
| K | 19,87 | 8,93 | 475 |
| L | 16,72 | 10,2 | 425 |
| M | 11,22 | 7,9 | 350 |

**Tabelle II**

| Analyse des Eluats von unkonditinierten eisenoxidhaltigen Rückständen aus der Pigmentproduktion | | |
|---|---|---|
| | Probe 1 | Probe 2 |
| 1. pH-Wert | 4,6 | 4,7 |
| 2. Leitfähigkeit µS/cm | 1.605 | 1.670 |
| 3. CSB mgO₂/l | 40 | 40 |
| 4. Sulfatgehalt mg/l | 20 | 58 |
| 5. Chlorid-Gehalt mg/l | 2200 | 675 |
| 6. Kupfer-Gehalt mg/l | 0,015 | 0,011 |
| 7. Nickel-Gehalt mg/l | 12 | 8,1 |
| 8. Zink-Gehalt mg/l | 0,88 | 0,12 |

**Tabelle III**

| Analyse des Eluats von konditioniertem, agglomeriertem eisenoxidhaltigen Rückständen aus der Pigmentproduktion | | | | | |
|---|---|---|---|---|---|
| Proben-Nr. | 1 | 2 | 3 | 4 | 5 |
| Substanzmenge [g] | 54,00 | 58,00 | 56,65 | 51,86 | 53,45 |
| Feuchtigkeit [%] | 7,45 | 13,76 | 11,75 | 3,59 | 6,45 |
| Trockensubstanz [g] | 49,98 | 50,02 | 50,00 | 50,00 | 50,00 |
| Anteil Flugasche | 22,7 | | 16,6 | 8,8 | 16,6 |
| Anteil Braunkohlen-Koksstaub | | 9,0 | | | |

| Meßwerte im Eluat nach 24 Stunden | | | | | |
|---|---|---|---|---|---|
| pH-Wert | 11,2 | 6,7 | 9,3 | 9,6 | 8,9 |
| Leitfähigkeit [mS/cm] | 3,71 | 1,96 | 4,98 | 4,76 | 4,72 |
| CSB [mgO₂/l] | 31 | < 5 | < 5 | 13 | 15 |
| Sulfat-Gehalt [mg/l] | 354 | <10 | 798 | 769 | 814 |
| Chlorid-Gehalt [mg/l] | 1000 | 740 | 1320 | 1240 | 1140 |
| Kupfer-Gehalt [mg/l] | <0,01 | 4,1 | <0,01 | <0,01 | <0,01 |
| Nickel-Gehalt [mg/l] | <0,01 | 20,0 | <0,01 | 0,036 | 0,019 |
| Zink-Gehalt [mg/l] | <0,005 | 0,62 | <0,005 | <0,005 | <0,005 |

## Patentansprüche

1. Verfahren zum Behandeln von Walzzunderschlamm, Schlämmen aus der Produktion von Pigmenten, Schwarz schlamm, Schlämmen aus der Pyrit-Verarbeitung, Konverterschlamm, Gichtgasschlamm, Schlämmen aus der spanabhebenden Bearbeitung sowie Gemischen dieser Schlämme, wobei man den Schlämmen bzw. Gemischen Flugasche und/oder Koksstäube und ggfs. andere Stäube in solcher Menge zufügt und mit den Schlämmen bzw. Gemischen vermischt, bis die Flüssigkeit soweit gebunden ist, daß Agglomerate vorliegen und daß das so erhaltene Produkt durch Sieben in einen Verunreinigungen enthaltenden Grobanteil und einen Feinanteil mit einer maximalen Korngröße von etwa 4 mm Durchmesser zum Einblasen in einen metallurgischen Prozeß oder für die Zementherstellung klassiert wird.

2. Verfahren nach Anspruch 1, dadurch gekennzeichnet, daß die Schlämme bzw. Gemische dieser Schlämme vor dem Vermischen mit Flugasche und/oder Koksstäuben z. B. durch Rühren homogenisiert werden bzw. wird.

3. Verfahren nach Anspruch 1, dadurch gekennzeichnet, daß Flugasche verwendet wird, die aus Braunkohlenfeuerungen stammt.

4. Verfahren nach Anspruch 1, dadurch gekennzeichnet, daß Flugasche verwendet wird, die aus Steinkohlenfeuerungen stammt.

5. Verfahren nach Anspruch 1, dadurch gekennzeichnet, daß aus Braunkohle hergestellter Koks verwendet wird.

6. Verfahren nach Anspruch 1, dadurch gekennzeichnet, daß aus Steinkohlen hergestellter Koks verwendet wird.

7. Verfahren nach Anspruch 1, dadurch gekennzeichnet, daß dem Schlamm bzw. dem Gemisch Braunkohlenstaub hinzugefügt wird.

8. Verfahren nach Anspruch 1, dadurch gekennzeichnet, daß dem Schlamm bzw. dem Gemisch Steinkohlenstaub hinzugefügt wird.

9. Verfahren nach Anspruch 1, dadurch gekennzeichnet, daß dem Schlamm bzw. dem Gemisch gebrannter Kalk oder solche Substanzen hinzugefügt werden, die unter hohen Temperaturen gebrannten Kalk liefern.

10. Verfahren nach Anspruch 1, dadurch gekennzeichnet, daß man das resultierende Gemisch, gegebenenfalls nach dem Klassiervorgang, pelletiert.

11. Verfahren nach Anspruch 10, dadurch gekennzeichnet, daß die Pellets gehärtet werden.

12. Verfahren nach Anspruch 11, dadurch gekennzeichnet, daß die Härtung der Pellets durch Lagern an der Luft und/oder durch Zufuhr von Wärme durchgeführt wird.

13. Verfahren nach Anspruch 10, dadurch gekennzeichnet, daß die kleinere Fraktion, die beim Siebvorgang gewonnen wird, pelletiert wird.

14. Verfahren nach Anspruch 1, dadurch gekennzeichnet, daß der Siebvorgang zum Entfernen von Verunreiniungen aus dem Gemisch dient.

## Claims

1. A process for the treatment of rolling scale sludge, sludges from the production of pigments, black sludge, sludges from pyrite processing, converter sludge, blast furnace gas sludge, sludges from cutting machining and mixtures of said sludges, wherein fly ash and/or coke dusts and possibly other dusts are added to the sludges or mixtures and mixed with the sludges or mixtures in such an amount until the liquid is bound to such an extent that agglomerates are present and that the product obtained in that way is graded by sieving into a coarse component containing impurities and a fine component with a maximum grain size of about 4 mn diameter for injection into a metallurgical process or for cement manufacture.

2. A process according to claim 1 characterised in that the sludges or mixtures of said sludges is or are homogenised for example by agitation prior to mixing with fly ash and/or coke dusts.

3. A process according to claim 1 characterised in that fly ash which comes from brown coal firing operations is used.

4. A process according to claim 1 characterised in that fly ash which comes from pit coal firing operations is used.

5. A process according to claim 1 characterised in that coke made from brown coal is used.

6. A process according to claim 1 characterised in that coke produced from pit coals is used.

7. A process according to claim 1 characterised in that brown coal dust is added to the sludge or the mixture.

8. A process according to claim 1 characterised in that pit coal dust is added to the sludge or the mixture.

9. A process according to claim 1 characterised in that quick lime or those substances which produce quick lime at high temperatures are added to the sludge or the mixture.

10. A process according to claim 1 characterised in that the resulting mixture is pelletised, optionally after the grading operation.

11. A process according to claim 10 characterised in that the pellets are hardened.

12. A process according to claim 11 characterised in that hardening of the pellets is effected by storage in the air and/or by the application of heat.

13. A process according to claim 10 characterised in that the smaller fraction which is obtained in the sieving operation is pelletised.

14. A process according to claim 1 characterised in that the sieving operation serves to remove impurities from the mixture.

## Revendications

1. Procédé pour traiter des boues résiduelles à base de mâchefer, des boues de production de pigments, des boues noires ou des résidus de traitement de pyrites, des boues de convertisseurs, des boues de gaz des hauts-fourneaux, des boues résiduelles d'usinage par enlèvement de copeaux, ainsi que des mélanges de ces diverses boues résiduelles, procédé dans lequel on ajoute à ces boues ou à leurs mélanges des cendres volantes et/ou du coke pulvérulent et éventuellement d'autres matières pulvérulentes, en opérant à un dosage approprié, pour effectuer ce mélange avec la boue ou les mélanges de boues à traiter, jusqu'à en réduire la fluidité au point d'obtenir des granules d'aggloméré, pour pouvoir traiter par criblage le produit ainsi obtenu en séparant les particules de gros calibre contenant des impuretés, et les particules fines ayant au maximum un calibre d'environ 4 mm, afin d'introduire celles-ci par insufflation dans un processus métallurgique ou de fabrication de ciment.

2. Procédé selon la revendication 1, caractérisé en ce qu'on traite par exemple par agitation les boues résiduelles ou leurs mélanges, avant de les mélanger avec des cendres volantes et/ou du coke pulvérulent, pour en assurer l'homogénéisation.

3. Procédé selon la revendication 1, caractérisé en ce qu'on utilise des cendres volantes provenant de la combustion du lignite.

4. Procédé selon la revendication 1, caractérisé en ce qu'on utilise des cendres volantes provenant de la combustion de charbon de terre.

5. Procédé selon la revendication 1, caractérisé en ce qu'on utilise du coke produit à partir du lignite.

6. Procédé selon la revendication 1, caractérisé en ce qu'on utilise du coke produit à partir de charbon de terre.

7. Procédé selon la revendication 1, caractérisé en ce qu'on ajoute du lignite pulvérulent aux boues à traiter ou à leurs mélanges.

8. Procédé selon la revendication 1, caractérisé en ce qu'on ajoute du charbon de terre pulvérulent aux boues à traiter ou à leurs mélanges.

9. Procédé selon la revendication 1, caractérisé en ce qu'on ajoute aux boues à traiter ou à leurs mélanges de la chaux calcinée ou des matières produisant à haute température de la chaux calcinée.

10. Procédé selon la revendication 1, caractérisé en ce qu'on transforme en boulettes le mélange résultant, éventuellement après le criblage de séparation des calibres.

11. Procédé selon la revendication 10, caractérisé en ce qu'on durcit les boulettes.

12. Procédé selon la revendication 11, caractérisé en ce que, pour durcir les boulettes, on expose celles-ci à l'air et/ou à un apport de chaleur.

13. Procédé selon la revendication 10, caractérisé en ce qu'on met en boulettes la fraction de plus petit calibre obtenue par criblage.

14. Procédé selon la revendication 1, caractérisé en ce que le criblage sert à éliminer des impuretés en les séparant du mélange.
